(19) Europäisches Patentamt
European Patent Office
Office européen des brevets

(11) Veröffentlichungsnummer: **0 042 102**
**B1**

# (12) EUROPÄISCHE PATENTSCHRIFT

(45) Veröffentlichungstag der Patentschrift: **29.08.84**

(51) Int. Cl.³: **B 01 J 13/02,** C 08 G 73/06, C 08 G 65/34, C 08 G 75/04

(21) Anmeldenummer: **81104257.1**

(22) Anmeldetag: **03.06.81**

## (54) Verfahren zur Herstellung von Mikrokapseln.

(30) Priorität: **14.06.80 DE 3022453**

(43) Veröffentlichungstag der Anmeldung: **23.12.81 Patentblatt 81/51**

(45) Bekanntmachung des Hinweises auf die Patenterteilung: **29.08.84 Patentblatt 84/35**

(84) Benannte Vertragsstaaten: **BE CH DE FR GB IT LI NL**

(56) Entgegenhaltungen:
**DE - A - 2 502 505**
**DE - A - 2 636 144**
**DE - A - 2 757 528**
**DE - B - 1 189 713**

**CHEMICAL ABSTRACTS, Band 91, Nr. 16, Oktober 1979, Seite 17, Nr. 124214w, Columbus, Ohio, U.S.A.**

(73) Patentinhaber: **BAYER AG, Konzernverwaltung RP Patentabteilung, D-5090 Leverkusen 1 Bayerwerk (DE)**

(72) Erfinder: **Wegner, Christian, Dr., Roggendorfstrasse 65, D-5000 Köln 80 (DE)**
Erfinder: **Jabs, Gert, Dr., Wingensieferkamp 25, D-5068 Odenthal (DE)**
Erfinder: **Dahm, Manfred, Dr., Am Falkenberg 29, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 042 102 B1

BUNDESDRUCKEREI BERLIN

**Beschreibung**

Die Erfindung betrifft die Herstellung von Mikrokapseln unter Verwendung von neuen Wandbildnern.

Die Mikroverkapselung von organischen oder anorganischen Stoffen ist grundsätzlich bekannt. Ein bevorzugtes Verfahren ist die Grenzflächenpolyreaktion, bei der zwei Reaktionspartner in nicht miteinander mischbaren Flüssigkeiten gelöst werden und diese dann nach dem Zusammengeben in einer Zone heftiger Turbulenz unter Ausbildung eines die Kapselwand bildenden Polymeren miteinander reagieren (US-A-3 575 882, 3 577 515, 3 607 776).

In der Praxis stellt man zur Mikroverkapselung durch Grenzflächenreaktion zunächst eine Emulsion her, deren disperse Phase aus einer Lösung des einzukapselnden Materials sowie des einen für den Aufbau des Polymeren notwendigen Reaktionspartners besteht. Die kontinuierliche Phase besteht meist aus Wasser. Zu dieser Emulsion fügt man nun den anderen wasserlöslichen Reaktanten hinzu. Es bildet sich dann an der Phasengrenzfläche der dispergierten kugeligen Tröpfchen durch Reaktion der beiden Komponenten das Polymere als Hülle einer Mikrokapsel aus. Geeignete Reaktanten für die disperse Phase sind z. B. Polyisocyanate, Polycarbodiimide, Polycarbonsäurechloride, Polysulfonsäurechloride, Polychlorameisensäurechloride, Phosgen und Epoxide. Der wasserlösliche Reaktionspartner besteht im allgemeinen aus Verbindungen, die mindestens zwei OH-, NH- und/oder SH-Gruppen besitzen.

Gegenstand der Erfindung ist ein Verfahren zur Herstellung von Mikrokapseln durch Grenzflächenpolyreaktion, indem man eine Lösung des einzukapselnden Materials in dem ersten Reaktanten in Wasser emulgiert, so daß die Konzentration der organischen Phase in der Emulsion 5—40% ist und die Größe der dispergierten Tröpfchen 3—500 µm, dann einen zweiten, wasserlöslichen Reaktanten zufügt und beide unter Bildung eines Polymeren reagieren läßt, dadurch gekennzeichnet, daß man eine 3- bis 30%ige Lösung einer Verbindung der Formel I, II oder III

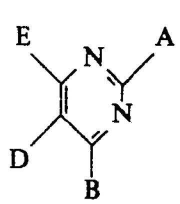

(I)

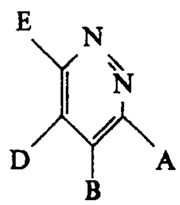

(II)

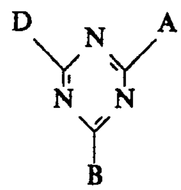

(III)

wobei mindestens zwei der Reste A, B, D und E unter den Bedingungen der Kapselwandbildung reaktive Halogen- (Fluor, Chlor, Brom), Ammonium-, Hydrazinium-. Sulfonium-, gegebenenfalls substituierte Alkylsulfonyl-, Arylsulfonyl-, Aralkylsulfonium-, Acido-, Aryloxy-, Rhodano-, Arylthio- und Sulfonsäurereste sind, und die restlichen Reste A, B, D und E unter den Bedingungen der Kapselwandbildung nichtreaktive Wasserstoff-, Alkyl-, Aryl-, Alkoxy-, Phenoxy-, Alkylamino- oder Phenylaminoreste darstellen, in dem einzukapselnden Medium in Wasser dispergiert, eine wasserlösliche, aliphatische, cycloaliphatische oder aromatische Verbindung mit mindestens zwei Zerewitinoff-aktiven Wasserstoffatomen zufügt und die erhaltene Dispersion 0,5 bis 8 Stunden bei Raumtemperatur und 0,5 bis 4 Stunden bei 30—80° C ausreagieren läßt.

Bevorzugte reaktive Reste sind Halogen, insbesondere Fluor und Chlor, sowie Methyl-, Ethyl- und Phenylsulfonylreste.

Gegenstand der Erfindung ist ein Verfahren zur Herstellung von Mikrokapseln durch Grenzflächenpolyreaktion, indem man eine Lösung des einzukapselnden Materials in dem ersten Reaktanten in Wasser emulgiert, dann einen zweiten wasserlöslichen Reaktanten zufügt und beide unter Bildung eines Polymeren reagieren läßt und das dadurch gekennzeichnet ist, daß der in der dispersen Phase gelöste Reaktant eine Verbindung der Formeln I, II oder III ist.

Beispiele der erfindungsgemäß einsetzbaren Verbindungen der Formeln I, II und III sind

2,4,6-Trichlortriazin, 2,4,6-Trifluortriazin, Tetrachlorpyrimidin, 5-Chlor-2,4,6-trifluorpyrimidin, 2-Sulfonylmethyl-4-methyl-5,6-dichlorpyrimidin, 2,6-Difluor-4-methyl-5-chlorpyrimidin, Tetrachlorpyridazin, 2,4-Dichlor-6-phenyltriazin, 2,4-Dichlor-6-methyltriazin, 2,4-Dichlor-6-(2-methoxi)-triazin.

Auch Gemische aus diesen Verbindungen sind einsetzbar.

Die Kapseln mit den erfindungsgemäßen Wandbildnern können nach den bekannten Methoden der Grenzflächenpolyreaktion hergestellt werden. So wird zunächst eine 3- bis 30%ige, bevorzugt 7- bis 20%ige Lösung des erfindungsgemäßen Wandbildners in dem einzukapselnden Medium hergestellt. Diese Lösung wird nun bei Raumtemperatur in einer solchen Menge Wasser dispergiert, daß die Konzentration der organischen Phase in der Emulsion 5 bis 40%, bevorzugt 15 bis 35% beträgt. Die

Größe der dispergierten Tröpfchen kann in den Grenzen zwischen 3 und 500 µm beliebig variiert werden. Vorteilhaft ist es, der wäßrigen Lösung vor dem Dispergiervorgang Schutzkolloide, wie z. B. Polyvinylalkohole, und/oder Emulgatoren zuzusetzen. Ist die gewünschte Teilchengröße erreicht, so setzt man der Dispersion bei Raumtemperatur unter Rühren mit einem Laborrührer eine mindestens difunktionelle, wasserlösliche, mit den Verbindungen der Formeln I, II oder III reaktive Komponente zu. Vorzugsweise wird dabei so verfahren, daß diese reaktive Komponente in Form einer 20- bis 80%igen wäßrigen Lösung eingesetzt wird. Die Dispersion wird dann 0,5 bis 8 Stunden, bevorzugt 1 bis 3 Stunden bei Raumtemperatur und anschließend 0,5 bis 4 Stunden bei Temperaturen von 30 bis 80° C, vorzugsweise 0,5 bis 2 Stunden bei 45 bis 65° C nachgerührt. Es werden dann agglomeratfreie, dichte und stabile Mikrokapseldispersionen erhalten.

Reaktive Komponenten — Kettenverlängerungsmittel —, die mit Verbindungen der Formeln I, II und III reagieren, sind bevorzugt wasserlösliche aliphatische, cycloaliphatische, araliphatische oder aromatische Verbindungen, die mindestens zwei Zerewitinoff-aktive Wasserstoffatome tragen, d. h., im wesentlichen OH-, NH- und/oder SH-Verbindungen.

Beispiele solcher Verbindungen sind Ethylenglykol, Propandiol-1,2 und Propandiol-1,3, Butandiol1,4, Butandiol-1,3, Hexandiol-1,6, Trimethylolpropan, Glycerin, Pentaerythrit, Glukose, Saccharose, Ethanolamin, Diethanolamin, Triethanolamin, N-Methylethanolamin, Isopropanolamin, Hydrazin, Ethylendiamin, Diethylentriamin, Triethylentetramin, Hexamethylendiamin, Isophorondiamin, 2,4- und 2,6-Diaminotoluol.

Einsetzbar sind auch Gemische der vorgenannten Komponenten sowie die durch Addition von Ethylenoxid oder Propylenoxid daraus erhältlichen Polyether.

Bevorzugte Kettenverlängerungsmittel sind wegen ihrer erhöhten Reaktivität niedere Polyamine, speziell Hydrazin, Ethylendiamin, Diethylentriamin, Isophorondiamin sowie Gemische aus diesen. Es können auch Kettenverlängerungsmittel mit funktionellen Gruppen eingesetzt werden, wie z. B. die Dimethylolpropionsäure oder das Natriumsalz der 2-(2-Aminoethylamino)-ethansulfonsäure.

Die relativen Mengen der Verbindungen der Formeln (I), (II) oder (III) und der Kettenverlängerungsmittel können so gewählt werden, daß ein Molverhältnis der jeweiligen funktionellen Gruppen von 1 : 0,8 bis 1 : 2, bevorzugt etwa 1 : 1, erhalten wird.

Verwendet man NH-Gruppen enthaltende Kettenverlängerungsmittel und Halogen enthaltende Verbindungen der Formeln (I), (II) oder (III), dann verbraucht die bei der Polyreaktion entstehende Halogenwasserstoffsäure durch Salzbildung einen Teil des Kettenverlängerungsmittels. In diesem Fall ist es daher notwendig, einen 1,5- bis 10fachen, bevorzugt 2- bis 4fachen Aminüberschuß zu wählen.

Bezüglich der einzukapselnden Komponente bestehen keinerlei Beschränkungen, sofern diese bei Raumtemperatur flüssig und mit Wasser mischbar ist und die erfindungsgemäßen Wandbildner in einer für eine Wandbildung hinreichenden Konzentration zu lösen vermag. Die einzukapselnde Komponente kann auch ein Gemisch mehrerer Substanzen sein, es können auch Lösungen eines oder mehrerer Feststoffe eingesetzt werden.

Als Beispiele für einzukapselnde Materialien seien genannt: organische Lösungsmittel wie Toluol oder Chloroform, Pflanzenschutzmittel, Öle, Wachse, Flammschutzmittel, Lösungen von Farbstoffen und Leukofarbstoffen, Parfümöle, Klebstoffe, Katalysatoren und Treibmittel.

Es ist auch möglich, die Kapseln durch Sprühtrocknung von Wasser zu befreien, um so ein Kapselpulver zu erhalten, man kann aber auch einen Dispergiermittelaustausch vornehmen und so zu Kapseln gelangen, die in einem organischen Medium als äußerer Phase dispergiert sind.

## Beispiel 1

### Verkapselung eines Lösungsmittels

Eine Lösung von 12 g 2,4,6-Trichlortriazin in 138 g Dibutylphthalat werden in 300 g einer 0,5%igen wäßrigen Lösung eines Polyvinylalkohols (88% Verseifungsgrad) an einer Ultraschallpfeife emulgiert, wobei eine Teilchengröße von 9 µm erreicht wird. Unter Rühren mit einem Laborrührer setzt man dann eine Lösung von 18 g Diethylentriamin in 32 g entsalztem Wasser zu. Die Dispersion wird eine Stunde bei Raumtemperatur und anschließend 2 Stunden bei 60° C gerührt. Man erhält eine Dispersion, die das Lösungsmittel in runden, agglomeratfreien Kapseln enthält. Die Verkapselung gelingt auch, wenn die Menge des Amins auf die Hälfte gesenkt wird.

## Beispiel 2

### Verkapselung eines Lösungsmittels

Eine Lösung von 22,5 g Tetrachlorpyrimidin in 127,5 g Diisopropylnaphthalin wird entsprechend Beispiel 1 emulgiert. Dann setzt man 15,6 g Diethylentriamin und 8,4 g Ethylendiamin, gelöst in 20 g Wasser, zu. Es wird 1 Stunde bei Raumtemperatur und 2 Stunden bei 50° C nachgerührt. Man erhält

eine agglomeratfreie Kapseldispersion eines Lösungsmittels.

Beispiel 3

Verkapselung eines Flammschutzmittels

Eine Lösung von 22,5 g 5-Chlor-2,4,6-trifluorpyrimidin in 127,5 g Trichlorethylphosphat wird entsprechend Beispiel 1 emulgiert. Dann setzt man 15,6 g Diethylentriamin und 8,4 g Ethylendiamin, gelöst in 26 g Wasser, zu. Es wird 1 Stunde bei Raumtemperatur und 2 Stunden bei 50°C nachgerührt. Man erhält eine Kapseldispersion eines Flammschutzmittels.

Beispiel 4

Verkapselung eines Leukofarbstoffes

11,2 g eines biuretisierten Hexamethylendiisocyanats (NCO: 21%) und 11,2 g 2,4,6-Trichlortriazin werden in 127,5 g Dibutylphthalat, welches 3%ig an Paratoluolsulfinat von Michlers Hydrol ist, gelöst und entsprechend Beispiel 1 emulgiert. Dann setzt man eine Lösung von 16,3 g Diethylentriamin in 33,7 g Wasser zu, rührt 1 Stunde bei Raumtemperatur und 2 Stunden bei 60°C nach. Man erhält eine dichte, temperaturstabile und agglomeratfreie Tintenkapseldispersion, die zur Herstellung von selbstdurchschreibenden Papieren eingesetzt werden kann.

Beispiel 5

Verkapselung eines Pflanzenschutzmittels

11,2 g 2,4,6-Trichlortriazin und 11,2 g eines Isocyanatgruppen enthaltenden Hexamethylendiisocyanats (NCO: 22%) werden in 127,5 g Diethoxi-thio-phosphoryloximino-phenylacetonitril gelöst und in 250 g einer 0,5%igen Lösung eines Polyvinylalkohols (88% Verseifungsgrad) so lange emulgiert, bis die durchschnittliche Teilchengröße 4 μm beträgt. Unter Rühren mit einem Laborrührer werden dann 99,8 g einer 50%igen wäßrigen Lösung des Natriumsalzes der 2-(2-Aminoethylamino)-ethansulfonsäure zugesetzt. Man rührt 1 Stunde bei Raumtemperatur und 2 Stunden bei 60°C nach und erhält eine leicht redispergierbare Kapseldispersion eines Pflanzenschutzmittels.

**Patentanspruch**

Verfahren zur Herstellung von Mikrokapseln durch Grenzflächenpolyreaktion, indem man eine Lösung des einzukapselnden Materials in dem ersten Reaktanten in Wasser emulgiert, so daß die Konzentration der organischen Phase in der Emulsion 5—40% ist und die Größe der dispergierten Tröpfchen 3—500 μm, dann einen zweiten, wasserlöslichen Reaktanten zufügt und beide unter Bildung eines Polymeren reagieren läßt, dadurch gekennzeichnet, daß man eine 3- bis 30%ige Lösung einer Verbindung der Formel I, II oder III

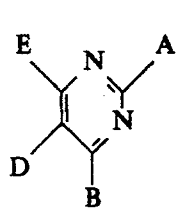
(I)

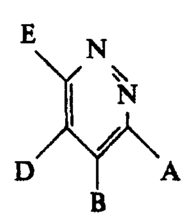
(II)

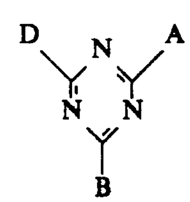
(III)

wobei mindestens zwei der Reste A, B, D und E unter den Bedingungen der Kapselwandbildung reaktive Halogen- (Fluor, Chlor, Brom), Ammonium-, Hydrazinium-, Sulfonium-, gegebenenfalls substituierte Alkylsulfonyl-, Arylsulfonyl-, Aralkylsulfonium-, Acido-, Aryloxy-, Rhodano-, Arylthio- und Sulfonsäurereste sind, und die restlichen Reste A, B, D und E unter den Bedingungen der Kapselwandbildung nichtreaktive Wasserstoff-, Alkyl, Aryl-, Alkoxy-, Phenoxy-, Alkylamino- oder Phenylaminoreste darstellen, in dem einzukapselnden Medium in Wasser dispergiert, eine wasserlösliche, aliphatische, cycloaliphatische oder aromatische Verbindung mit mindestens zwei Zerewitinoff-aktiven Wasserstoffatomen zufügt und die erhaltene Dispersion 0,5 bis 8 Stunden bei Raumtemperatur und 0,5 bis 4

Stunden bei 30—80° C ausreagieren läßt.

**Claim**

Process for the production of microcapsules by interfacial polyreaction, in which a solution of the material to be encapsulated, in the first reactant, is emulsified in water such that the concentration of the organic phase in the emulsion is 5—40% and the size of the dispersed droplets is 3—500 μm, a second water-soluble reactant is then added and both are allowed to react to form a polymer, characterised in that a 3 to 30% solution of a compound of the formula I, II, or III

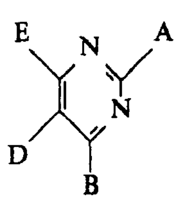

(I)

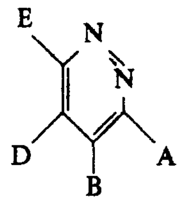

(II)

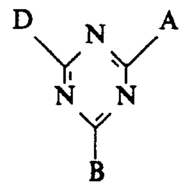

(III)

wherein at least two of the radicals A, B, D and E are halogen (fluorine, chlorine, bromine), ammonium, hydrazinium, sulphonium, optionally substituted alkyl sulphonyl, aryl sulphonyl, aralkyl sulphonium, acido, aryloxy, thiocyano, arylthio and sulphonic acid radicals which are reactive under the conditions of the capsule-wall-forming reaction and the remaining radicals A, B, D and E represent hydrogen, alkyl, aryl, alkoxy, phenoxy, alkylamino or phenylamino radicals which are not reactive under the conditions of the capsule-wall-forming reaction, in the medium to be encapsulated, is dispersed in water, a water-soluble, aliphatic, cycloaliphatic or aromatic compound having at least two Zerewitinoff-active hydrogen atoms is added and the resulting dispersion is allowed to finish reacting for 0.5 to 8 hours at room temperature and for 0.5 to 4 hours at 30—80° C.

**Revendication**

Procédé pour la fabrication de microcapsules par polyréaction à l'interface dans lequel on émulsionne dans l'eau une solution de la substance à encapsuler dans le premier réactif, de sorte que la concentration de la phase organique dans l'émulsion soit de 5—40% et la dimension des gouttelettes dispersées de 3—500 μm, ensuite on ajoute un second réactif soluble dans l'eau et on fait réagir les deux avec formation d'un polymère, caractérisé en ce que l'on disperse dans l'eau une solution à 3—30% d'un composé de formule I, II ou III

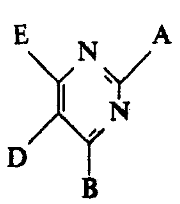

(I)

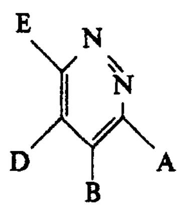

(II)

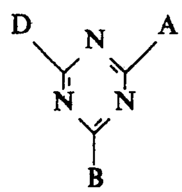

(III)

où deux au moins des restes A, B, D et E sont des restes halogène (fluor, chlore, brome), ammonium, hydrazinium, sulfonium, alkylsulfonyle éventuellement substitué, arylsulfonyle, arylalkylsulfonium, acido, aryloxy, rhodano, arylthio et acide sulfonique, réactifs dans les conditions de la formation de parois et les autres restes A, B, D et E représentent des restes hydrogène, alkyle, aryle, alcoxy, phénoxy, alkylamino ou phénylamino, non réactifs dans les conditions de la formation de parois, dans le milieu à encapsuler, on ajoute un composé aliphatique, cycloaliphatique ou aromatique soluble dans l'eau ayant au moins deux atomes d'hydrogène actifs de Zérewitinoff et on fait réagir totalement la dispersion obtenue pendant 0,5 à 8 h à la température ambiante et 0,5 à 4 h à 30—80° C.